# EUROPEAN PATENT APPLICATION

(11) **EP 2 077 497 A1**
(43) Date of publication of application: **08.07.2009**
(21) Application number: 08253947.9
(22) Date of filing: 10.12.2008
(51) Int. Cl.: G06F 9/44, H04L 29/08

(54) **Standardizing user interface across multiple content resources**

(30) Priority: 10.12.2007 US 953781
(71) Applicant: Intel Corporation, Santa Clara, CA 95052 (US)
(72) Inventor: Kim, Eric, Atherton, CA 94027 (US); Bell, Genevieve, Portland, OR 97202 (US); Johnson, Brian David, Portland, OR 97210 (US)
(74) Representative: Want, Clifford James

(57) **Abstract**

A method for providing a uniform user interface experience across multiple content delivery applications comprises implementing a data structure configured for storing data related to user interface features for controlling display of content delivered to a display screen. At least a first user interface application and a second user interface application are, respectively, utilized in association with a first content source and a second content source. The data structure is populated by at least one of said first and second user interface applications, in response to user interaction with a user interface control device. The data stored in the data structure is processed to provide a user interface environment that is uniform across the first and second user interface applications.

## Description

Certain marks referenced herein may be common law or registered trademarks of third parties affiliated or unaffiliated with the applicant or the assignee. Use of these marks is for providing an enabling disclosure by way of example and shall not be construed to limit the scope of this invention to material associated with such marks.

### TECHNICAL FIELD

The present disclosure relates generally to control units and user interfaces for controlling or manipulating content on a display device, and more particularly to a system and method which provides a standardized user interface for controlling or manipulating content rendered on a display screen through various signal sources.

### BACKGROUND

A device commonly referred to as a set top box is typically connected between one or more signal sources and a television (TV). Such a device is configured to receive input signals from different sources (e.g., a first signal from a DVD player, a second signal from an optical fiber cable, a third signal from a satellite dish, a fourth signal from an internet protocol (IP) network, etc.) and to process the signals so that they can be rendered on the TV.

Currently, separate navigation applications are utilized that allow a user to interact with each different signal source. That is, for each signal source, the presentation of interactive options and information is unique to the navigation application associated with that source. For example, the user interface and navigation scheme provided for controlling the content received from a DVD source is different from that provided for controlling content broadcasted from a cable source. The user interface and navigation scheme may include, for example, the menus, the indicator and the order in which certain actions occur for the content to be displayed on TV, in response to user interaction.

Generally, the user interface for each navigation application is dictated by the manufacturer of the device on which a particular navigation application is running. Therefore, the content provider (e.g., cable or satellite company) or the content player (e.g., DVD player, personal computer, etc.) and each navigation application may be configured to realize user interface implementations that are functionally or visually distinguishable from each other. As a result, a user will have to learn the specific features of each navigation application in order to navigate among different sources and control the display of content provided from different sources.

Additionally, since the range of applications and services available in the present TV and entertainment systems can be incredibly varied, this variety can result in a confusing interactive experience for the user. Accordingly, systems and methods are desired which can provide a uniform user interface and interaction architecture for controlling content provided from different sources.

### BRIEF DESCRIPTION OF THE DRAWINGS

Embodiments of the present invention are understood by referring to the figures in the attached drawings, as provided below.

FIG. 1 is a block diagram of an exemplary operating environment for providing a standardized user interface over various applications, in accordance with one embodiment.

FIG. 2 is a flow diagram of an exemplary method for controlling user interface for content displayed on a display device connected to a standardized user interface system, in accordance with one embodiment.

FIG. 3 is a display according to an embodiment of the invention including a transparent indicator, indicating that there is no selectable content.

FIG. 4 is a display according to an embodiment of the invention including a colored indicator indicating interactive content or other options available to a user.

FIG. 5 is a display according to an embodiment of the invention including a solid indicator indicating that selectable content is displayed from which a user can select.

FIG. 6 is a display according to an embodiment of the invention including a solid indicator indicating a change of state or display of additional material.

Features, elements, and aspects of the invention that are referenced by the same numerals in different figures represent the same, equivalent, or similar features, elements, or aspects, in accordance with one or more embodiments.

### DETAILED DESCRIPTION OF EXAMPLE EMBODIMENTS

The present invention is directed to methods and systems for maintaining a uniform user interface environment, while a user employs any of the multiple applications available across a system (e.g., a set top box) used for delivering content to a display screen (e.g., a TV).

For purposes of summarizing, certain aspects, advantages, and novel features of the invention have been described herein. It is to be understood that not all such advantages may be achieved in accordance with any one particular embodiment of the invention. Thus, the invention may be embodied or carried out in a manner that achieves or optimizes one advantage or group of advantages without achieving all advantages as may be taught or suggested herein.

A method for providing a uniform user interface experience across multiple content delivery applications is provided. The method comprises implementing a data structure configured for storing data related to user interface features for controlling display of content delivered to a display screen. The data in the data structure is monitored by logic code running on a first system delivering content to the display screen from a plurality of content sources.

At least a first user interface application and a second user interface application are, respectively, utilized in association with a first content source and a second content source, such that the first user interface application is configured to cause a user to experience a first user interface environment during the delivery of the first content, and the second user interface application is configured to cause a user to experience a second user interface environment during the delivery of the second content.

The method may further comprise populating the data in the data structure by at least one of said first and second user interface applications, in response to user interaction with a user interface control device; and processing the data stored in the data structure to provide a user interface environment that is uniform across the first and second user interface applications, such that the look and feel of the user interface does not change when the user switches between the first content source and the second content source for delivery of content to the display screen.

In accordance with one aspect of the invention, a system comprising one or more logic units is provided. The one or more logic units are configured to perform the functions and operations associated with the above-disclosed methods. In yet another embodiment, a computer program product comprising a computer useable medium having a computer readable program is provided. The computer readable program when executed on a computer causes the computer to perform the functions and operations associated with the above-disclosed methods.

One or more of the above-disclosed embodiments in addition to certain alternatives are provided in further detail below with reference to the attached figures. The invention is not, however, limited to any particular embodiment disclosed.

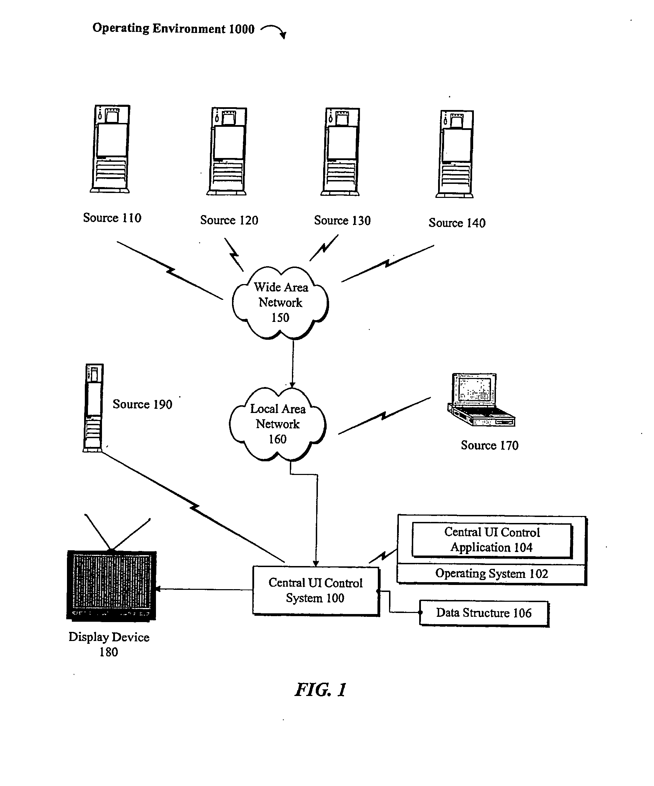

Referring to FIG. 1, an operating environment 1000 in accordance with one embodiment may comprise several content sources 110-140 (e.g., remote server systems) connected to a wide area network 150 (e.g., IP network) which in turn is connected to a local area network 160 (e.g., a home-based wireless network) utilized for networking several devices, such as source 170 (e.g., a personal computer) and a central user interface (UI) control system 100 (e.g., a set top box).

As shown, the central UI control system 100 may act as a conduit between a display device 180 (e.g., a TV set) and multiple content sources. As provided above, some of the content sources may be connected to the central UI control system 100 via a local or wide area network. Other devices, such as source 190 (e.g., a DVD player, a gaming system, a cable feed, etc.) may be directly connected to the central UI control system 100.

In accordance with one embodiment, central UI control system 100 is configured to receive signal input (i.e., feed) from all sources, process the feed and provide it to display device 180 so that the user interface environment and navigation menu for controlling the feed and rendering the received content on display device 180 remains consistent, regardless of which source is providing the content.

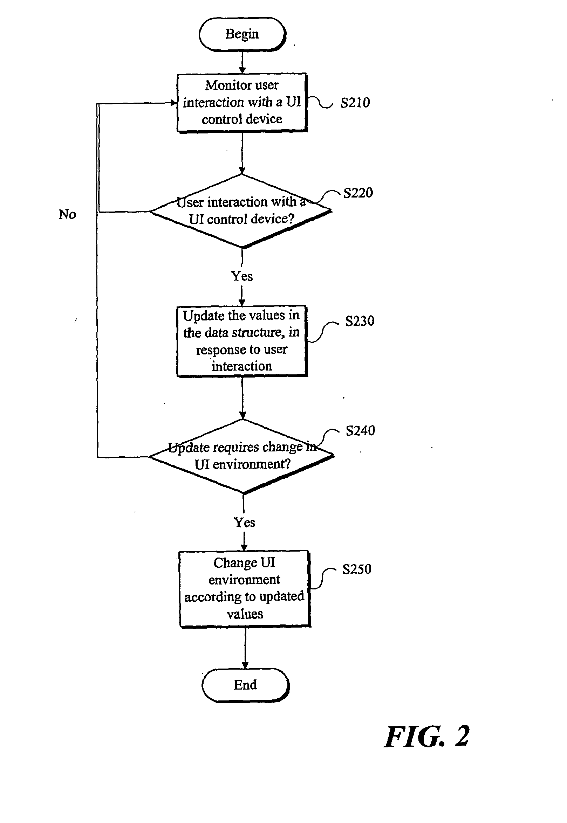

Referring to FIGS. 1 and 2, a central UI control application 104 is executed, desirably, on top of an operating system 102 running on central UI control system 100 to monitor user interaction with a UI control device (e.g., a remote control) utilized by a user to control display of content on display device 180 (S210). If central UI control application detects user interaction with the UI control device (S220), then values in a data structure 106 are updated, in response to user interaction (S230).

Data structure 106 is implemented, desirably, as a central means for recording changes in values that control the appearance and functionality of the user interface environment which is used to control content display on display device 180 regardless of the source of the content. Data structure 104 may be implemented in the form of any suitable data structure, such as a table, a linked list, an array, or a set of records in a relational database, for example.

When values in data structure 106 are updated, central UI control application 104 determines whether this change in value requires a change in the UI environment (S240). That is, central UI control application 104 controls the appearance and functionality of the user interface environment and changes such appearance or functionality according to changes in values stored in data structure 106 (S250). In one embodiment, central UI control application 104 exclusively controls any changes to the user interface environment by way of referring to values stored in data structure 106.

The above implementation is advantageous in that it circumvents the problem associated with multiple navigation applications taking turns in controlling the user interface environment when the user switches from one content source to the next. That is, instead of each application associated with each source is given the option of forcing a respective proprietary user interface environment, each application simply updates values in data structure 106 and allows central UI control application 104 to uniformly manage and control the appearance of user interface environment, regardless of which content source is providing the content for display.

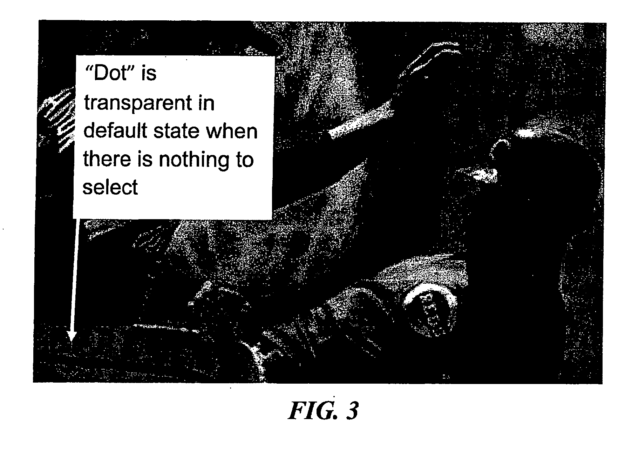

Referring to FIGS. 3 through 6, for example, multiple sources 110, 120, 170 and 190 may be connected to central UI control system 100. Source 110 may be a remote server providing streaming content over the wide area network 150; such content may include audio or video content streaming over the Internet Protocol (IP). Source 120 may be another remote server for providing news or traffic information over IP. Source 170 may be a personal computer connected to central UI control system 100 in local area network 160 to provide access to files stored in source 170. And, source 190 may be a DVD player or game box directly connected to central UI control system 100 to provide DVD or gaming content.

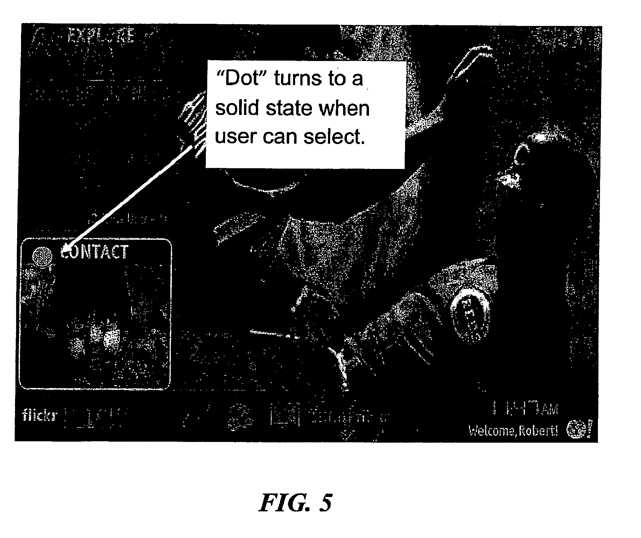

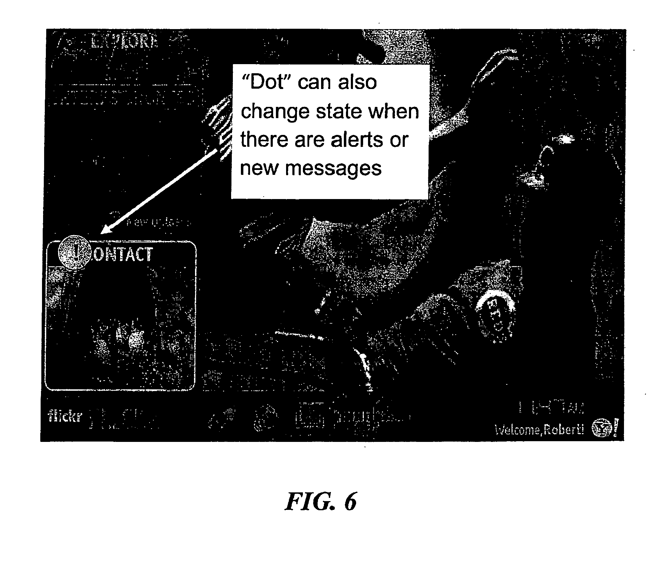

As provided in further detail below, a uniform user interface environment may be displayed in which multiple applications are active (see for example FIGS. 5 and 6). When multiple applications are active, different areas of display device 180 are allocated to content associated with each application. Referring to FIG. 5, for example, upper left of the display may be allocated to display content provided by source 110, middle left of the display may be allocated to display content provided by source 120, lower left of the display may be allocated to source 170, and so on.

In one embodiment, a user may switch between the applications that control the display of each content, effortlessly, by for example moving a user interface indicator (e.g., a mouse pointer, or as noted in the figures a "Dot") from one location on the display to the next. Desirably, the indicator comprises embedded functionality for allowing a user to determine additional information about certain content displayed (or about to be displayed) on display device 180.

In a certain embodiment, shape, color or other attribute associated with the indicator may change to indicate a change in status of content being displayed. For example, referring to FIG. 3, the indicator may be in shape of a dot (or alternatively an arrow, a hand, or other moniker, not shown) that changes color, shape or position when a change in status of displayed content is detected. For example, the indicator may be transparent when there is no selectable content displayed (e.g., FIG. 3).

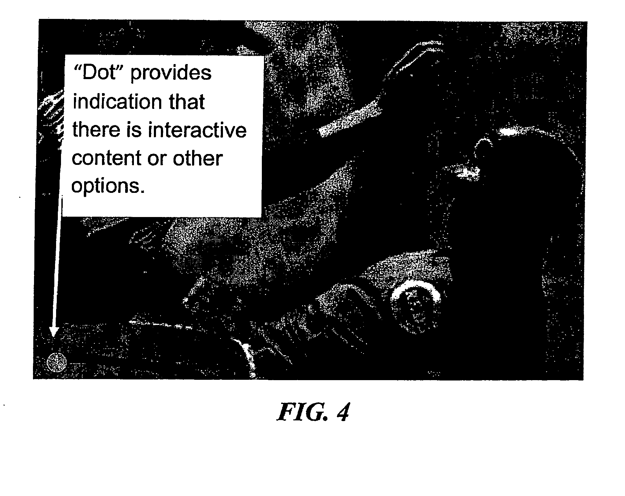

In one embodiment, if the indicator color changes from transparent, for example, to a first predetermined color (e.g., green), then that may be an indication that there is interactive content or other options available to a user (see, for example, FIG. 4). Or if the indicator turns to a solid state, it may be an indication that selectable content are displayed from which a user can select (see, for example, FIG. 5).

Selectable content may comprise, for example, interactive content such as hyperlinks or other objects that once selected result in a change of state or display of additional content (e.g., retrieving content from an internet server). In accordance with one embodiment, the indicator attributes may also change to indicate a change of state, for example, when alerts or new messages are present. As shown in FIG. 6, for example, the indicator may display an exclamation mark or other symbol that is suggestive of arrival of a new message.

In one or more embodiments, the indicator's appearance is controlled by values stored in data structure 106 so that, regardless of which content source or navigation application is active at a display state, the respective user interface attributes associated with the indicator are treated uniformly across all applications, under the control of central UI control application 104. In other words, a standardized approach is provided for updating the attributes of the indicator, by way of updating the respective values in data structure 106 for said attributes.

Accordingly, different user interface applications are configured to update the respective values for user interface attributes stored in data structure 106, such that a central UI control application 104 can monitor and interpret the change in value in association with a change in status of content being displayed. This implementation provides for a uniform user interface environment across all applications. Thus, a user can control and navigate the content provided via a variety of different sources in a consistent and homogenous manner, even as the user switches among the different applications to access different content.

In a certain embodiment, the indicator and data structure 106 are implemented at the operating system level of the software stack of the central UI control system 100, so that the multiple applications associated with different content sources may directly access data structure 106, for example.

In addition to making consumer interaction less confusing and troublesome, this scheme would also save content and service providers time to market by providing them with a predetermined and consistent standard with which to program related applications used for delivery of content to display device 180.

It should be understood that the logic code, programs, modules, processes, methods, and the order in which the respective elements of each method are performed are purely exemplary. Depending on the implementation, they may be performed in any order or in parallel, unless indicated otherwise in the present disclosure. Further, the logic code is not related, or limited to any particular programming language, and may be comprise one or more modules that execute on one or more processors in a distributed, non-distributed, or multiprocessing environment.

The method as described above may be used in the fabrication of integrated circuit chips. The resulting integrated circuit chips can be distributed by the fabricator in raw wafer form (that is, as a single wafer that has multiple unpackaged chips), as a bare die, or in a packaged form. In the latter case, the chip is mounted in a single chip package (such as a plastic carrier, with leads that are affixed to a motherboard or other higher level carrier) or in a multi-chip package (such as a ceramic carrier that has either or both surface interconnections of buried interconnections).

In any case, the chip is then integrated with other chips, discrete circuit elements, and/or other signal processing devices as part of either (a) an intermediate product, such as a motherboard, or (b) and end product. The end product can be any product that includes integrated circuit chips, ranging from toys and other low-end applications to advanced computer products having a display, a keyboard or other input device, and a central processor.

Therefore, it should be understood that the invention can be practiced with modification and alteration within the scope of the appended claims. The description is not intended to be exhaustive or to limit the invention to the precise form disclosed. These and various other adaptations and combinations of the embodiments disclosed are within the scope of the invention and are further defined by the claims.

## Claims

1. A method for providing a uniform user interface experience across multiple content delivery applications, the method comprising:
implementing a data structure configured for storing data related to user interface features for controlling display of content delivered to a display screen,
wherein the data in the data structure is monitored by logic code running on a first system delivering content to the display screen from a plurality of content sources,
wherein at least a first user interface application and a second user interface application are, respectively, utilized in association with a first content source and a second content source, such that the first user interface application is configured to cause a user to experience a first user interface environment during the delivery of the first content, and the second user interface application is configured to cause a user to experience a second user interface environment during the delivery of the second content;
populating the data in the data structure by at least one of said first and second user interface applications, in response to user interaction with a user interface control device; and
processing the data stored in the data structure to provide a user interface environment that is uniform across the first and second user interface applications, such that the look and feel of the user interface does not change when the user switches between the first content source and the second content source for delivery of content to the display screen.

2. The method of claim 1, further comprising implementing a graphical indicator for display on the display screen, wherein a change in appearance of the graphical indicator indicates a change in status of content being displayed on the display device.

3. The method of claim 2, wherein the change in appearance comprises a change in color of the indicator.

4. The method of claim 2, wherein the change in appearance comprises a change in shape of the indicator.

5. The method of claim 2, wherein a change in status indicates that content displayed on at least one portion of the display device is interactive in nature.

6. The method of claim 2, wherein a change in status indicates that content displayed at least on one portion of the display device is selectable, in response to user interaction with the user interface control device.

7. The method of claim 2, wherein a change in status indicates that a message is pending for user review.

8. The method of claim 2, wherein the user interface control device is a remote control.

9. The method of claim 1, wherein the data structure is configured pursuant to a standard, so that any user interface application, running on a content resource connected to the first system has read and write access to the data structures content in accordance to a predefined standard.

10. A system for providing a uniform user interface experience across multiple content delivery applications, the system comprising:
memory for storing a data structure configured for storing data related to user interface features for controlling display of content delivered to a display screen,
wherein the data in the data structure is monitored by logic code running on a first system delivering content to the display screen from a plurality of content sources,
wherein at least a first user interface application and a second user interface application are, respectively, utilized in association with a first content source and a second content source, such that the first user interface application is configured to cause a user to experience a first user interface environment during the delivery of the first content, and the second user interface application is configured to cause a user to experience a second user interface environment during the delivery of the second content;
a logic unit for populating the data in the data structure by at least one of said first and second user interface applications, in response to user interaction with a user interface control device; and
a processor for processing the data stored in the data structure to provide a user interface environment that is uniform across the first and second user interface applications, such that the look and feel of the user interface does not change when the user switches between the first content source and the second content source for delivery of content to the display screen.

11. The system of claim 10, further comprising a graphical indicator for display on the display screen, wherein a change in appearance of the graphical indicator indicates a change in status of content being displayed on the display device.

12. The system of claim 11, wherein the change in appearance comprises a change in color of the indicator.

13. The system of claim 11, wherein the change in appearance comprises a change in shape of the indicator.

14. The system of claim 11, wherein a change in status indicates that content displayed on at least one portion of the display device is interactive in nature.

15. A computer program product comprising program code means arranged to perform all the steps of the method as claimed in any of claims 1 to 9 when that program code means is run on a computer.

16. A computer-readable medium embodying a computer program product as claimed in claim 15.
